Europäisches Patentamt

European Patent Office

Office européen des brevets

(19)

(11) Veröffentlichungsnummer: **0 360 974**
**A2**

(12) # EUROPÄISCHE PATENTANMELDUNG

(21) Anmeldenummer: 89109177.9

(51) Int. Cl.⁵: **B62D 55/14**

(22) Anmeldetag: 22.05.89

(30) Priorität: 27.09.88 DE 3832682

(43) Veröffentlichungstag der Anmeldung:
**04.04.90 Patentblatt 90/14**

(84) Benannte Vertragsstaaten:
**AT BE CH DE ES FR GB GR IT LI LU NL SE**

(71) Anmelder: **Clouth Gummiwerke AG**
**Niehler Strasse 92 - 116**
**D-5000 Köln 60(DE)**

(72) Erfinder: **Eisengarten, Hubert, Dipl.-Ing.**
**Krefelder Wall 41**
**D-5000 Köln 1(DE)**

(74) Vertreter: **Happe, Otto, Dipl.-Ing.**
**Isselburger Strasse 12**
**D-5000 Köln 60(DE)**

(54) **Laufrolle für Kettenfahrzeuge.**

(57) Bei einem Gleiskettenlaufrad, das gleichzeitig zur Führung der Kettenführungszähne dient und bei dem die den Kettenführungszähnen zugewandten Führungsflanken durch aus Stahl bestehende Verschleißschutzringe geschützt sind, sind die Verschleißschutzringe (4) durch Reibschweißen auf das Gleiskettenlaufrad (Radkranz 1) aufgebracht.

EP 0 360 974 A2

## Gleiskettenlaufrad

Die Erfindung bezieht sich auf ein Gleiskettenlaufrad, das gleichzeitig zur Führung der Kettenführungszähne dient und bei dem die den Kettenführungszähnen zugewandten Führungsflanken durch aus Stahl bestehende Verschleißschutzringe geschützt sind.

Gleiskettenlaufräder sind an den Führungsflanken, die den Kettenführungszähnen zugewandt sind, durch die ständige Reibung der Kettenführungszähne an den Führungsflanken des Rades einem starken Verschleiß ausgesetzt. Die bekannten Gleiskettenlaufräder weisen daher an den Führungsflanken einen Verschleißschutz auf.

Bei Gleiskettenlaufrädern aus Stahl sind beispielsweise die Führungsflanken oberflächengehärtet. Nach Abnutzung der gehärteten Schicht wird das Gleiskettenlaufrad durch Auftragsschweißung wieder verwendbar gemacht. Die Standzeit der oberflächengehärteten Schicht und der Auftragsschweißung ist wegen der geringen Schichtdicke nicht sehr groß. Ferner erfordert das Aufbringen der Auftragsschweißung einen erheblichen Zeitaufwand.

Gleiskettenlaufräder bestehen häufig auch aus Leichtmetall. Dies ist wegen der Gewichtsersparnis, insbesondere bei gepanzerten Gleiskettenfahrzeugen, sehr erwünscht.

Da sich Aluminium mit Stahl nicht durch Schweißen verbinden läßt, hat man bisher auf die gefährdeten Flanken einen Stahlring aufgenietet. Diese punktförmige Befestigung hält aber auf die Dauer den Beanspruchungen durch seitliche Schläge und den Spannungen infolge der verschiedenen Temperaturkoeffizienten von Leichtmetall und Stahl sowie der Ausweitung, die zwangsläufig durch die hämmernde Wirkung der Kettenführungszähne entsteht, nicht stand.

Das Aufspritzen von Stahl auf die Führungsflanken der Leichtmetallfelgen hat ebenfalls nicht verhindern können, daß nur wegen des Verschleißes oder durch frühzeitige Aufbrüche der Schutzschicht die Räder vorzeitig ausgewechselt werden mußten, obwohl die Gummibandagen noch nicht verschlissen waren.

Bei einem bekannten Gleiskettenlaufrad sind die Verschleißschutzringe über eine Gummischicht mit den Führungsflanken verbunden (DT-OS 16 80 323). Durch die Erwärmung, die infolge der Reibung der Kettenführungszähne an den Verschleißschutzringen auftritt, kann es zu Ablösungen der Gummischicht kommen.

Als Alternative zu der Verbindung der Verschleißschutzringe über eine Gummischicht sind bei einem weiteren Gleiskettenlaufrad (DT-OS 19 39 239) die Verschleißschutzringe mit Hakenförmigen Vorsprüngen versehen, die in der Bandage fest verankert sind. Diese Verschleißschutzringe können nur gleichzeitig mit der Bandage ausgewechselt werden.

Schließlich ist ein Gleiskettenlaufrad bekannt, bei dem die Verschleißschutzringe angeschraubt sind (DT-OS 19 40 792). Bei der Beanspruchung, der ein Gleiskettenlaufrad ausgesetzt ist, löst sich jedoch die Schraubverbindung nach einer gewissen Zeit.

Der Erfindung liegt die Aufgabe zugrunde, ein Gleiskettenlaufrad, bei dem die den Kettenführungszähnen zugewandten Führungsflanken durch aus Stahl bestehende Verschleißschutzringe geschützt sind, derart zu gestalten, daß eine dauerhafte Verbindung des Verschleißschutzringes mit dem Gleiskettenlaufrad und eine hohe Standzeit des Verschleißschutzringes gewährleistet ist.

Die Lösung der gestellten Aufgabe besteht darin, daß die Verschleißschutzringe durch Reibschweißen auf das Gleiskettenlaufrad aufgebracht sind.

Gegenüber den bekannten Gleiskettenlaufrädern aus Stahl weist das erfindungsgemäße Gleiskettenlaufrad die Vorteile auf, daß die Standzeit des Verschleißschutzringes wesentlich höher ist, als die Standzeit der verhältnismäßig dünnen oberflächengehärteten Schicht.

Gegenüber den bekannten Gleiskettenlaufrädern aus Leichtmetall weist das erfindungsgemäße Gleiskettenlaufrad die Vorteile auf, daß sich die Verschleißschutzringe auch bei Erwärmung oder harter schlagender Beanspruchung nicht ablösen, und daß ein guter Wärmeübergang zwischen den Verschleißschutzringen und dem Gleiskettenlaufrad gewährleistet ist.

Eine vorteilhafte Ausführungsform des Gegenstandes der Erfindung besteht darin, daß die Verschleißschutzringe einen im wesentlichen rechtekkigen Querschnitt aufweisen und derart angeordnet sind, daß sie etwa parallel zu der angrenzenden Oberfläche der Kettenführungszähne verlau fen. Dadurch ist gewährleistet, daß durch das Reibschweißen keine Schubkomponente auftritt, während eine verhältnismäßig hohe Anlauffläche geboten wird.

In weiterer Ausgestaltung der Erfindung bestehen die Verschleißschutzringe aus vergütetem Stahl.

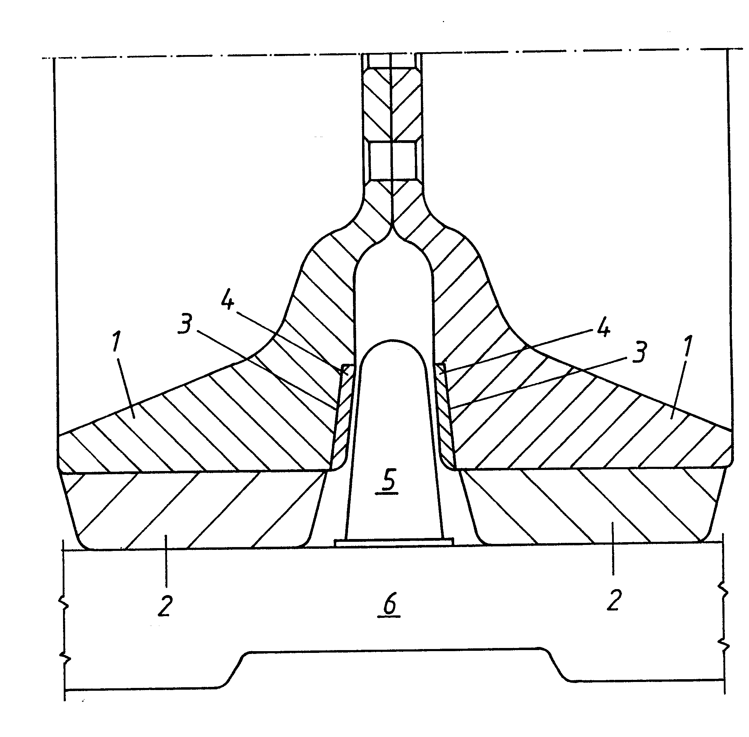

In der Zeichnung ist ein Ausführungsbeispiel des Gegenstandes der Erfindung im Querschnitt dargestellt. Bei dem dargestellten Ausführungsbeispiel sind die Laufflächen von Radkränzen 1 mit Gummibandagen 2 versehen. In entsprechenden Aussparungen 3 der Radkränze 1 sind Verschleißschutzringe 4 angeordnet. Die Verschleißschutzringe 4 weisen einen im wesentlichen rechteckigen Querschnitt auf und verlaufen etwa parallel zu der angrenzenden Oberfläche von Kettenführungszähnen 5 einer Gleiskette 6.

**Ansprüche**

1. Gleiskettenlaufrad, das gleichzeitig zur Führung der Kettenführungszähne dient und bei dem die den Kettenführungszähnen zugewandten Führungsflanken durch aus Stahl bestehende Verschleißschutzringe geschützt sind, **dadurch gekennzeichnet,** daß die Verschleißschutzringe (4) durch Reibschweißen auf das Gleiskettenlaufrad (Radkranz 1) aufgebracht sind.

2. Gleiskettenlaufrad nach Anspruch 1, dadurch gekennzeichnet, daß die Verschleißschutzringe (4) einen im wesentlichen rechteckigen Querschnitt aufweisen und derart angeordnet sind, daß sie parallel zu der angrenzenden Oberfläche der Kettenführungszähne (5) verlaufen.

3.Gleiskettenlaufrad nach Anspruch 1 oder 2, dadurch gekennzeichnet, daß die Verschleißschutzringe (4) aus vergütetem Stahl bestehen.